Europäisches Patentamt

European Patent Office

Office européen des brevets

(19)

(11)    EP 0 884 362 B1

(12)    EUROPEAN PATENT SPECIFICATION

(45) Date of publication and mention
of the grant of the patent:
**13.09.2000   Bulletin 2000/37**

(51) Int Cl.$^7$: **C08L 59/00**, C08K 3/22

(86) International application number:
**PCT/JP97/00559**

(21) Application number: **97935348.9**

(22) Date of filing: **26.02.1997**

(87) International publication number:
**WO 97/31978 (04.09.1997 Gazette 1997/38)**

(54) **POLYOXYMETHYLENE COMPOSITION**

POLYOXYMETHYLENZUSAMMENSETZUNG

COMPOSITION DE POLYOXYMETHYLENE

(84) Designated Contracting States:
**DE ES FR GB IT NL**

(30) Priority:   **28.02.1996  JP  4141296**

(43) Date of publication of application:
**16.12.1998   Bulletin 1998/51**

(73) Proprietor: **POLYPLASTICS CO. LTD.
Osaka-shi, Osaka 541-0052 (JP)**

(72) Inventors:
 • **HASE, Hiroyuki
    Shizuoka 416 (JP)**
 • **SUGIYAMA, Noriyuki,
    Shizuoka 416-8533 (JP)**

 • **MATSUSHIMA, Mitsunori
    Shizuoka 420 (JP)**

(74) Representative: **Jackson, Peter
    Barker Brettell
    10-12 Priests Bridge
    London SW15 5JE (GB)**

(56) References cited:
**JP-A- 7 062 199          JP-A- 7 062 200
US-A- 3 597 387**

• **DATABASE WPIL ON QUESTEL, Week 9628,
London: DERWENT PUBLICATIONS LTD)., AN
96-268975; & CA,A,2 131 878 (POLYPLASTICS
K.K.).**

**Description**

Background Art

The present invention relates to a polyoxymethylene composition which is improved in thermal stability, in particular reduced in the formation of a mold deposit at the time of molding, and is reduced in malfunctions caused by the formic acid formed from the composition, such as, staining caused by bleeding from rubber or corrosion of a metallic magnetic substance.

Prior Art:

Polyoxymethylene is prepared by polymerization from formaldehyde, trioxane, i.e., a cyclic oligomer of formaldehyde, or both of trioxane and a comonomer such as a cyclic ether or cyclic formal, has a stabilized terminal, and contains an antioxidant and other thermal stabilizer(s) added for decomposition preventive purposes.

As proposed in the art, antioxidants which may be added to polyoxymethylene include sterically hindered phenolic compounds and sterically hindered amine compounds, and examples of the other thermal stabilizers include urea derivatives, amidine compounds, and hydroxides of alkali and alkaline earth metals. Polyoxymethylene compositions comprising the above additives undergo the influence of heat or oxygen in a cylinder of a molding machine at the time of molding. This is likely to generate a formaldehyde odor, which deteriorates a working (sanitary) environment. Further, molding for a long period of time causes deposition of a fine powder or tarry substance (MD) inside the mold surface, leading to a deteriorated appearance of a molding. That is, the polyoxymethylene composition suffers from drawbacks involved in molding. Despite various devices and proposals which have been made up to now, no satisfactory results could be necessarily obtained.

For some fields utilizing polyoxymethylene, a further improvement in the properties of polyoxymethylene as the material has been demanded.

Examples of such demands include a reduction in functional defects in mechanical components used in electric/electronic appliances, for example, audios and videos. Specifically, formic acid generated from polyoxymethylene moldings causes the problem of bleeding of additives contained in rubber rollers used in audio and video mechanical components onto the surface of the rubber, leading to contamination of a magnetic head through a magnetic tape and, when used in a comparatively hermetically sealed state together with a metallic magnetic material, causes corrosion of magnetic materials such as photomagnetic disks and metal-deposition tapes. Therefore, an essential solution to the above problems has been desired in the art.

Disclosure of Invention

The present inventors have proposed in JP-A 7-33952 the incorporation of magnesium oxide in polyoxymethylene in order to improve functional defects caused by formic acid. This proposal, however, has posed the problem of the formaldehyde odor in continuous injection molding of the polyoxymethylene composition and the problem of the generation of a deposit onto the mold, which has required further studies. Accordingly, the present inventors have made detailed studies on bleeding of rubber, corrosion of metallic magnetic materials, thermal stability, and moldability in the additive system for polyoxymethylene, comprising a sterically hindered phenolic antioxidant and magnesium oxide and, as a result, have found that incorporation of a sterically hindered phenolic antioxidant, a very small amount of a polyamide, and a particular magnesium oxide into polyoxymethylene can solve various problems in a well balanced manner, which has led to the completion of the present invention.

That is, the present invention relates to a polyoxymethylene composition comprising polyoxymethylene and, (a) 0.01 to 3% by weight, based on the polyoxymethylene, of a sterically hindered phenolic antioxidant, (b) 0.001 to 0.3% by weight, based on the polyoxymethylene, of a polyamide, and (c) 0.001 to 0.5% by weight, based on the polyoxymethylene, of magnesium oxide having a specific surface area of at least 10 $m^2/g$.

Detailed Description of the Invention

Components of the composition according to the present invention will now be described in detail.

Polyoxymethylene used in the present invention is a polymer compound comprising constituent units composed mainly of an oxymethylene group ($-CH_2O-$) and may be any of a polyoxymethylene homopolymer and a copolymer, a terpolymer, and a block copolymer containing a minor amount of constituent units other than the oxymethylene group, and may have not only a linear molecular structure but also a branched or crosslinking structure. The degree of polymerization and the like are not particularly limited.

Sterically hindered phenolic antioxidants (a) usable in the present invention include 2,2'-methylenebis(4-methyl-6-t-butylphenol), 1,6-hexanediol bis[3-(3,5-di-t-butyl-4-hydroxyphenyl)propionate], pentaerythritol tetrakis[3-(3,5-di-t-butyl-4-hydroxyphenyl)propionate], triethylene glycol bis[3-(3,5-di-t-butyl-4-hydroxyphenyl)propionate], 1,3,5-trimethyl-2,4,6-tris(3,5-di-t-butyl-4-hydroxybenzyl)benzene, n-octadecyl 3-(4'-hydroxy-3',5'-di-t-butylphenyl)propionate, 4,4'-methylenebis(2,6-di-t-butylphenol), 4,4'-butylidenebis (6-t-butyl-3-methylphenol), distearyl 3,5-di-t-butyl-4-hydroxybenzylphosphonate, 2-t-butyl-6-(3-t-butyl-5-methyl-2-hydroxybenzyl)-4-methylphenyl acrylate, and N,N'-hexamethylenebis(3,5-di-t-butyl-4-hydroxy-hydrocinnamide).

The amount of the sterically hindered phenolic antioxidant (a) to be added and incorporated in the present invention is 0.01 to 3% by weight, preferably 0.05 to 0.5% by weight, based on polyoxymethylene. When the amount of the component (a) added is excessively small, the effect is unsatisfactory, while when the amount is excessively large, the effect of thermal stabilization is saturated and, in addition, is likely to cause discoloration unfavorably.

The polyamide (b) used in the present invention is known as a thermal stabilizer used in combination with the sterically hindered phenolic antioxidant for polyoxymethylene, and any polyamide may be used. In general, a polyamide prepared by ring-opening polymerization of a lactam, condensation of a dicarboxylic acid with a diamine, condensation of an amino acid or the like is used. Specifically, nylon-6, nylon-6,6, nylon-6,10, a terpolymer thereof (6,6/6,10/6) and the like may be used. Preferably, the polyamide is used in the form of a dispersion prepared by preliminarily melt-kneading the polyamide and an ethylene copolymer from the viewpoint of the dispersibility in polyoxymethylene. Any compound having a vinyl group may be used as a component of the copolymer constituting the ethylene copolymer. In particular, esters of acrylic acid and/or methacrylic acid are preferred, and examples thereof include methyl acrylate, ethyl acrylate, hydroxyethyl acrylate, hydroxypropyl acrylate, methyl methacrylate, and ethyl methacrylate.

The amount of the polyamide (b) to be added and incorporated in the present invention is 0.001 to 0.3% by weight, preferably 0.005 to 0.1% by weight, based on polyoxymethylene. When the amount of the polyamide added is excessively small, the effect is unsatisfactory, while when the amount is excessively large, the effect of thermal stabilization is saturated and, in this case, the polyamide per se turns into a mold deposit, leading to deteriorated moldability unfavorably.

The magnesium oxide (c) used in the present invention should have a specific surface area of at least 10 $m^2$/g, preferably at least 50 $m^2$/g. When the specific surface area is less than 10 $m^2$/g, a large amount of magnesium oxide should be incorporated in order to attain the effect of inhibiting the generation of formic acid, which leads to a discoloration problem. The particle diameter of magnesium oxide is favorably not more than 100 μm, preferably not more than 10 μm.

Magnesium oxide may be prepared by firing basic magnesium carbonate in an electric oven. In this case, magnesium oxide having a desired specific surface area may be prepared by regulating the firing temperature, firing time and the like. It is a matter of course that commercially available products may be used.

A method for measuring the specific surface area will now be described. The specific surface area is the surface area per unit mass and hence can be calculated based on the surface area. The surface area was measured in this invention by gas adsorption. Specifically, a surface area measuring instrument (a fully automatic surface area measuring instrument Multisorp 12 manufactured by Yuasa Ionics Co., Ltd.) was used to adsorb a mixed gas composed of nitrogen and argon on a sample at a liquid nitrogen temperature, and determine the amount of the gas adsorbed on the sample by the BET adsorption isotherm to calculate the surface area of the sample. The specific surface area was determined by dividing the surface area by the weight of the sample.

The amount of magnesium oxide (c) to be added and incorporated in the present invention is 0. 001 to 0.5% by weight, preferably 0.005 to 0.1% by weight. When the amount of magnesium oxide added is excessively small, the effect is unsatisfactory, while when the amount is excessive, the effect of inhibiting the generation of formic acid is saturated and, rather unfavorably, the discoloration is likely to occur.

The sterically hindered phenolic antioxidant (a) and magnesium oxide (c) used in the present invention may be added to the monomer either in the stage of polymerizing the monomer or in the step of stabilizing the polymer.

At least one member selected from among nitrogen-containing compounds other than the polyamide (b) and organic and inorganic metal-containing compounds other than magnesium oxide (c) may be used in combination with the indispensable components according to the purposes, although these compounds are not indispensable to the polyoxymetylene composition of the present invention. Further, various conventional additives may be incorporated into the polyoxymethylene composition of the present invention. Example of the additives usable herein include various colorants, sliding property improvers, release agents, nucleating agents, antistatic agents, weather (light) stabilizers, and other surfactants and various polymers. At least one conventional filler of inorganic, organic, metallic and other materials in the form of fiber, flakes or particulates may be used in combination so far as the properties of moldings contemplated in the present invention are not remarkably deteriorated thereby. Examples of inorganic fillers usable herein include, though not limited, glass fibers, potassium titanate fibers, glass beads, talc, mica, and wollastonite.

The polyoxymethylene composition of the present invention may be easily molded by any conventional method commonly used as a resin molding preparation method. For example, a method which comprises the steps of mixing the components together, milling and extruding the mixture by means of a single- or twin-screw extruder to prepare pellets, mixing (diluting) a predetermined amount of the pellets, and molding the pellets into a molding having a contemplated composition. Further, a method preferred from the viewpoint of improving the dispersibility of additives is one wherein the polyacetal resin as the base material is partially or entirely pulverized and mixed with other components followed by extrusion or the like.

Mode for Carrying Out the Invention:

The present invention will now be described in more detail with reference to the following examples, though it is not limited to these examples only.

The polyoxymethylene composition of the present invention was evaluated by the following methods.

1) Amount of formic acid generated from molding

The amount of the formic acid generated was determined by placing 10 g of a polyoxymethylene molding cut into a size having a total surface area of about 10 cm$^2$ in a hermetically sealed container (capacity: 100 ml) so that the polyoxymethylene molding is not directly immersed in 1 ml of pure water, allowing the system to stand at 60°C/90%RH for 168 hr, diluting water in the hermetically sealed container to 100 ml, and measuring the concentration of formic acid in the solution with an ion chromatograph (IC 500, manufactured by Yokogawa Hewlett-Packard, Ltd. column for organic acid, 0.1 mM aqueous perchloric acid solution as carrier). The amount of the formic acid generated was expressed by converting the value obtained with the ion chromatograph to a value per unit surface area.

2) Blooming of rubber

A blooming test for rubber was carried out in the following manner under high temperature and high humidity conditions by using an audio/image reproduction mechanism comprising a rubber component incorporated into a substrate with a polyoxymethylene molding mounted thereon, the audio/image reproduction mechanism being packaged in a polyethylene bag. The relationship between the degree of blooming on the rubber component surface (ranked in ten grades by observation of the rubber surface under a microscope) and the amount of the formic acid generated on the substrate as the molding is given in the following table. For the rubber component, a cylindrically molded roller of a chloroprene rubber was incorporated into an audio/image reproduction mechanism substrate molded from polyoxymethylene, and the assembly was packaged in a polyethylene bag and allowed to stand in a 60°C/90%RH atmosphere for one week to observe the resultant bloom on the rubber surface under a microscope. The degree of blooming was visually ranked in ten grades wherein 1 represents that blooming is none and 10 represents very large blooming. This test was conducted thrice, and the average values of the results are given in the following table.

3) Amount of formaldehyde gas generated from melt

5 g of pellets were accurately weighed (A g) and kept in a metallic container at 200°C for 5 min. Thereafter, the atmosphere within the container was absorbed in deionized water. The amount of formaldehyde (B μg) in water was quantitatively determined according to the procedure "2L formaldehyde" of JIS K 0102, and the amount of the formaldehyde gas (C ppm) generated per g of the material was calculated.

$$B \ \mu g/A \ g = C \ ppm$$

4) Moldability (amount of mold deposit)

A sample polyoxymethylene composition was continuously molded (24 hr) with an injection molding machine into a particular form under the following conditions to evaluate the amount of the mold deposit. Specifically, staining of the mold caused by the continuous molding was visually inspected, and the results were evaluated according to the following five grades.

(Molding conditions)

    Injection molding machine: Toshiba IS 30 EPN (manufactured by Toshiba Machine Co., Ltd.)
    Cylinder temp.: 210°C

Injection pressure: 750 kg/cm$^2$
Injection time: 4 sec
Cooling time: 3 sec
Mold temp.: 30°C

```
   A         B         C         D         E

   <----------------------------------------->

   Slight                              heavy (deposited over

                                       the whole surface)
```

Examples 1 to 6

A sterically hindered phenolic antioxidant (a), a polyamide (b), and magnesium oxide (c) in respective proportions specified in Table 1 were mixed with an oxymethylene copolymer (Duracon, manufactured by Polyplastics Co., Ltd.), and the mixtures were extruded into pelletized compositions, which were then evaluated in the same manner as above. The results are summarized in Table 1.

Comparative Examples 1 to 4

As summarized in Table 1, pelletized compositions were prepared in the same manner as in Examples 1 to 6 except for incorporation of magnesium oxide so as to be outside the scope of the present invention and the like. The results are summarized in Table 1.

## Table 1

| | Ex. | | | | | | Comp.Ex. | | | |
|---|---|---|---|---|---|---|---|---|---|---|
| | 1 | 2 | 3 | 4 | 5 | 6 | 1 | 2 | 3 | 4 |
| Sterically hindered phenolic antioxidant Note 1) (wt %) | a-1 0.5 | a-1 0.5 | a-1 0.5 | a-2 0.5 | a-1 0.5 | a-1 0.5 | a-1 0.5 | a-1 0.5 | a-1 0.5 | a-1 0.5 |
| Polyamide Note 2) (wt %) | b-1 0.05 | b-1 0.05 | b-2 0.05 | b-1 0.05 | b-1 0.20 | b-1 0.05 | b-1 0.05 | b-1 0.50 | —— | b-1 0.05 |
| Magnesium oxide Note 3) (wt %) | c-1 0.05 | c-2 0.05 | c-1 0.05 | c-1 0.05 | c-1 0.05 | c-1 0.20 | c-3 0.05 | c-1 0.05 | c-1 0.05 | —— |
| Amt. of formic acid generated ($\mu g/cm^2$) | 0.43 | 0.41 | 0.44 | 0.38 | 0.33 | 0.40 | 0.94 | 0.30 | 0.51 | 2.12 |
| Rank for rubber blooming | 1.0 | 1.0 | 1.0 | 1.0 | 1.0 | 1.0 | 3.6 | 1.0 | 1.3 | 9.0 |
| Amt. of formaldehyde gas generated (ppm) | 73 | 76 | 80 | 77 | 67 | 75 | 75 | 66 | 185 | 77 |
| Moldability (mold deposit) | A | A | A | A | B | A | A | E | D | A |

EP 0 884 362 B1

```
Note 1:  Sterically hindered phenolic antioxidant

         a- 1:  Pentaerythritol tetrakis[3-(3,5-di-t-butyl-4-hydroxyphenyl)propionate]

         a- 2:  Triethylene glycol bis[3-(3,5-di-t-butyl-4-hydroxyphenyl)propionate]

Note 2:  Polyamide

         b-1:  Terpolymer of polyamide (6,6/6,10/6)

         b-2:  Nylon-6

Note 3:  Magnesium oxide
```

The following magnesium oxide samples were prepared by firing basic magnesium carbonate at the following firing temperatures for one hr in an electric oven.

c-1: Magnesium oxide having a specific surface area of 50 $m^2$/g (firing temp.: 700°C)
c-2: Magnesium oxide having a specific surface area of 100 $m^2$/g (firing temp.: 500°C)
c-3: Magnesium oxide having a specific surface area of 1 $m^2$/g (firing temp.: 1500°C)

**Claims**

1. A polyoxymethylene composition comprising polyoxymethylene and (a) 0.01 to 3% by weight, based on the polyoxymethylene, of a sterically hindered phenolic antioxidant, (b) 0.001 to 0.3% by weight, based on the polyoxymethylene, of a polyamide, and (c) 0.001 to 0.5% by weight, based on the polyoxymethylene, of magnesium oxide having a specific surface area of at least 10 $m^2$/g.

2. The polyoxymethylene composition according to claim 1, characterized in that the specific surface area of the magnesium oxide (c) is at least 50 $m^2$/g.

**Patentansprüche**

1. Polyoxymethylen-Zusammensetzung, umfassend:
   Polyoxymethylen und (a) 0,01 bis 3 Gew.-%, bezogen auf das Polyoxymethylen, eines sterisch gehinderten, phenolischen Antioxidationsmittels, (b) 0,001 bis 0,3 Gew.-%, bezogen auf das Polyoxymethylen, eines Polyamids und (c) 0,001 bis 0,5 Gew.-%, bezogen auf das Polyoxymethylen, Magnesiumoxid, das eine spezifische Oberfläche von wenigstens 10 $m^2$/g aufweist.

2. Polyoxymethylen-Zusammensetzung gemäß Anspruch 1, dadurch gekennzeichnet, daß die spezifische Oberfläche des Magnesiumoxids (c) wenigstens 50 $m^2$/g beträgt.

**Revendications**

1. Composition de polyoxyméthylène comprenant du polyoxyméthylène et (a) 0,01 à 3 % en poids, par rapport au polyoxyméthylène, d'un antioxydant phénolique stériquement empêché, (b) 0,001 à 0,3 % en poids, par rapport au polyoxyméthylène, d'un polyamide, et (c) 0,001 à 0,5 % en poids, par rapport au polyoxyméthylène, d'oxyde de magnésium ayant une surface spécifique d'au moins 10 m$^2$/g.

2. Composition de polyoxyméthylène selon la revendication 1, caractérisée en ce que la surface spécifique de l'oxyde de magnésium (c) est d'au moins 50 m$^2$/g.